# EUROPEAN PATENT APPLICATION

(11) **EP 4 296 093 A1**
(43) Date of publication of application: **27.12.2023**
(21) Application number: 22756229.5
(22) Date of filing: 16.02.2022
(51) Int. Cl.: B60C 15/04

(54) **PNEUMATIC TIRE**

(30) Priority: 17.02.2021 JP 2021023670
(71) Applicant: BRIDGESTONE CORPORATION, Chuo-ku Tokyo 104-8340 (JP)
(72) Inventor: NAKATA, Yoshiki, Tokyo 104-8340 (JP); OOSAWA, Yasuo, Tokyo 104-8340 (JP)
(74) Representative: Marks & Clerk LLP
(86) International application number: PCT/JP2022/006188
(87) International publication number: WO 2022/176911

(57) **Abstract**

In a bead core, metal cords are accumulated and formed in plural columns and plural columns, and the row direction length is formed greater than the column direction length; the metal cords are set in two or more columns from the third row of the metal cords on as counted from a tire radial direction outer end inward in the tire radial direction and excepting a tire radial direction innermost end; a length dimension of the bead core is set equal to or greater than twice a maximum width dimension of the bead core; the centroid of the bead core is positioned on the tire radial direction inner end side of the bead core relative to the lengthwise direction center portion of the bead core; a maximum width portion of the bead core is positioned from the second row of the metal cords on as counted from the tire radial direction inner end of the bead core outward in the tire radial direction; and the maximum width portion of the bead core is positioned from the second row of the metal cords on as counted from the tire radial direction outer end of the bead core inward in the tire radial direction.

## Description

### Technical Field

The present disclosure relates to a pneumatic tire.

### Background Art

In bead portions of a pneumatic tire, bead cores formed by winding metal cords are embedded (e.g., see JP-A No. 2009-274477).

### SUMMARY OF INVENTION

### Technical Problem

It is important for the bead cores of a pneumatic tire to ensure the stiffness of the bead portions in the collapsing direction.

It is an object of the present disclosure to provide a pneumatic tire that can ensure the stiffness of the bead portions in the collapsing direction while achieving a reduction in weight.

### Solution to Problem

A pneumatic tire pertaining to a first aspect includes: a pair of bead cores that are embedded in bead portions and formed by winding metal cords in a tire circumferential direction; a carcass ply that straddles the pair of bead portions and has a body portion positioned between the bead cores and turn-up portions wound back around the bead cores; and side rubbers that are disposed on tire width direction outer sides of the carcass ply and form tire side portions, wherein in each of the bead cores, the metal cords are accumulated and formed in plural columns in a width direction orthogonal to a centerline between the main body portion and the turn-up portion and in plural rows along the centerline, and a row direction length is greater than a column direction length, in each of the bead cores, the metal cords are in two or more columns beginning from a third row of the metal cords as counted from a tire radial direction outer end inward in a tire radial direction and excepting a tire radial direction innermost end, a maximum length dimension of the bead core as measured along the centerline between the body portion and the turn-up portion is equal to or greater than twice a maximum width dimension of the bead core as measured in a direction perpendicular to a lengthwise direction of the bead core, a centroid of the bead core when seen in a cross section perpendicular to an axis of the bead core is positioned on a tire radial direction inner end side of the bead core relative to a lengthwise direction center portion of the bead core, a maximum width portion of the bead core is positioned beginning from a second row of the metal cords as counted from the tire radial direction inner end of the bead core outward in the tire radial direction, and the maximum width portion of the bead core is positioned beginning from the second row of the metal cords as counted from the tire radial direction outer end of the bead core inward in the tire radial direction.

In the pneumatic tire pertaining to the first aspect, the bead cores comprising the metal cords embedded in the bead portions have the following configurations.
(1) The metal cords are accumulated and formed in plural columns in the width direction orthogonal to the centerline between the main body portion and the turn-up portion and in plural columns along the centerline, and the row direction length is formed greater than the column direction length.
(2) In each of the bead cores, the metal cords are set in two or more columns from the third row of the metal cords on as counted from the tire radial direction outer end inward in the tire radial direction and excepting the tire radial direction innermost end.
(3) The length dimension of the bead core as measured along the centerline between the body portion and the turn-up portion is set equal to or greater than twice the maximum width dimension of the bead core as measured in a direction perpendicular to the lengthwise direction of the bead core.
(4) The centroid of the bead core when seen in a cross section perpendicular to the axis of the bead core is positioned on the tire radial direction inner end side of the bead core relative to the lengthwise direction center portion of the bead core.
(5) The maximum width portion of the bead core is positioned from the second row of the metal cords on as counted from the tire radial direction inner end of the bead core outward in the tire radial direction.
(6) The maximum width portion of the bead core is positioned from the second row of the metal cords on as counted from the tire radial direction outer end of the bead core inward in the tire radial direction.

The bead portions in which are embedded the bead cores having all these configurations (1) to (6) can achieve a reduction in weight while ensuring collapsing stiffness.

A pneumatic tire pertaining to a second aspect is the pneumatic tire pertaining to the first aspect, wherein the number of the metal cords arranged at the maximum width portion of the bead core is set to two or more and five or less.

In the pneumatic tire pertaining to the second aspect, a number of the metal cords arranged at the maximum width portion of the bead core is set to two or more and five or less, so it becomes possible to realize a reduction in weight while ensuring the bending stiffness of the bead core.

A pneumatic tire pertaining to a third aspect is the pneumatic tire pertaining to the first aspect or the second aspect, wherein the centroid of the bead core is positioned on a width direction centerline of the bead core.

In the pneumatic tire pertaining to the third aspect, by positioning the centroid of the bead core on the width direction centerline of the bead core, the body portion and the turn-up portion of the carcass ply disposed on the tire width direction of the bead core can be made to bear tension equally.

It will be noted that the width direction centerline of the bead core can be reworded as the axis of symmetry in a case where the bead core exhibits line symmetry.

A pneumatic tire pertaining to a fourth aspect is the pneumatic tire of any one of the first aspect to the third aspect, wherein a tire radial direction outermost end of the bead core is positioned on a tire radial direction inner side of a radial direction outer end of a rim flange of a mounting rim.

In the pneumatic tire pertaining to the fourth aspect, the bead core with a high bending stiffness is disposed on the rim radial direction inner side of the radial direction outermost end of the rim flange, so it becomes easier for the bead portion on the tire radial direction outer side of the bead core to deform along the curvature of the rim flange, so that, for example, when a large lateral force acts on the pneumatic tire, the load from the pneumatic tire can be dispersed and supported by the wide surface of the rim flange.

### Advantageous Effects of Invention

As described above, according to the pneumatic tire of the present disclosure, the pneumatic tire has the superior effect that it can ensure the stiffness of the bead portions in the collapsing direction while achieving a reduction in weight.

### BRIEF DESCRIPTION OF DRAWINGS

FIG. 1 is a sectional view showing a pneumatic tire pertaining to an embodiment of the present disclosure along the tire's axis of rotation.
FIG. 2 is an enlarged sectional view showing a bead portion of the pneumatic tire shown in FIG. 1.
FIG. 3 is a sectional view showing an example modification of the bead portion.
FIG. 4 is a sectional view showing another example modification of the bead portion.
FIG. 5 is a sectional view showing yet another example modification of the bead portion.
FIG. 6 is a sectional view showing yet another example modification of the bead portion.
FIG. 7A to FIG. 7C are sectional views showing example modifications of a bead core.
FIG. 8A to FIG. 8D are sectional views showing example modifications of the bead core.
FIG. 9A to FIG. 9E are sectional views showing example modifications of the bead core.
FIG. 10A to FIG. 10D are sectional views showing example modifications of the bead core.
FIG. 11A to FIG. 11D are sectional views showing example modifications of the bead core.
FIG. 12A to FIG. 12C are sectional views showing example modifications of the bead core.

### DESCRIPTION OF EMBODIMENTS

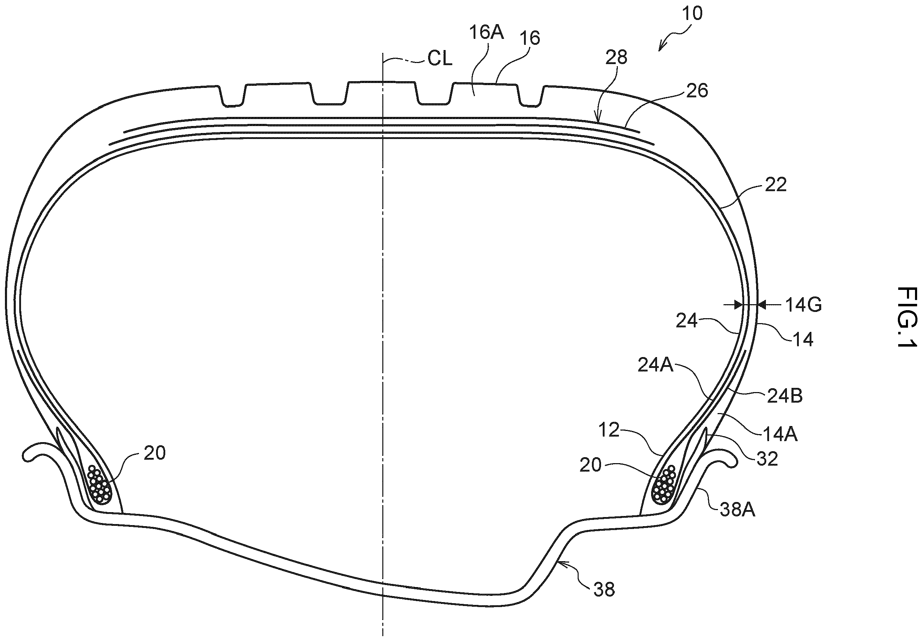

A pneumatic tire 10 pertaining to an embodiment of the present disclosure will be described using FIG. 1 to FIG. 6. In FIG. 1, as an example, a pneumatic tire 10 for a passenger car mounted on a rim 38 is shown in cross section along its axis of rotation.

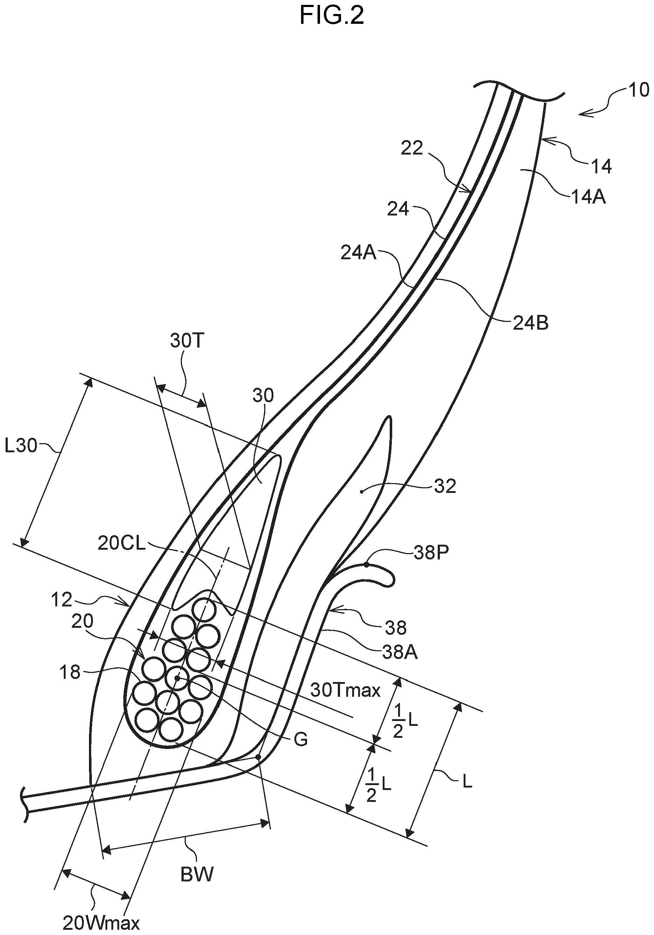

As shown in FIG. 1 and FIG. 2, the pneumatic tire 10 includes a pair of bead portions 12, a pair of tire side portions 14 that extend outward in the tire radial direction from the pair of bead portions 12, and a tread portion 16 that extends from one tire side portion 14 to the other tire side portion 14.

In the pair of bead portions 12A, bead cores 20 configured by winding metal cords 18 are embedded. It will be noted that the metal cords 18 of the present embodiment are steel cords used in the bead cores of common pneumatic tires, and the outer peripheries of the metal cords 18 are coated with rubber (not shown in the drawings).

Anchored to the pair of bead cores 20 is a carcass 22. In the carcass 22 of the present embodiment, end portion sides of one carcass ply 24 are turned up around the bead cores 20 from the tire inner side outward and anchored, and end portions of turn-up portions 24B are in contact with a body portion 24A. It will be noted that the carcass 22 may have two or more carcass plies 24.

On the tire width direction outer sides of the carcass 22 are disposed side rubber layers 14A forming the tire side portions 14.

On the tire radial direction outer side of the body portion 24Ais provided a belt 28 comprising one or plural belt plies 26. On the tire radial direction outer side of the belt 28 is disposed a tread rubber layer 16A forming the tread portion 16.

Between the body portion 24A and the turn-up portions 24B, bead fillers 30 extend outward in the tire radial direction from the bead cores 20.

The bead fillers 30 have a thickness 30T that decreases outward in the tire radial direction from the tire radial direction outer ends of the bead cores 20. A maximum thickness dimension 30Tmax of the bead fillers 30 is set smaller than a maximum width dimension 20Wmax of the bead cores 20 described later, and can be formed to the width of the tire radial direction outermost side of the bead core 20, in other words the width of the row on the tire radial direction outermost side, or the width of the second row inward in the tire radial direction from the tire radial direction outermost side, and, depending on the case, the width of the third row inward in the tire radial direction from the tire radial direction outermost side. The maximum thickness dimension 30Tmax of the bead fillers 30 is changed as appropriate in accordance with, for example, the required performance of the pneumatic tire 10.

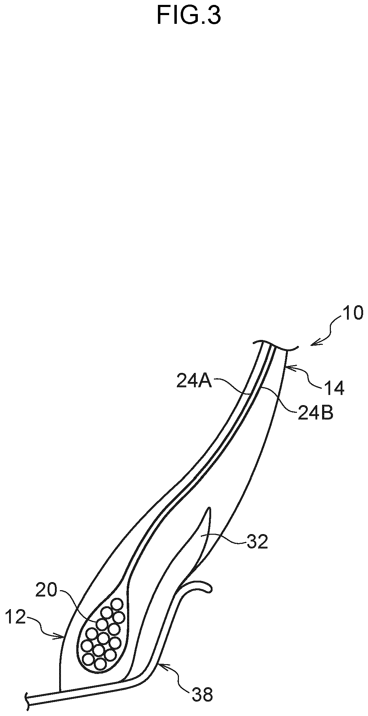

The bead fillers 30 are, as in conventionally common pneumatic tires, formed of a harder rubber than the side rubber layers 14A. It will be noted that the bead fillers 30 may be disposed as needed; as shown in FIG. 3, the bead fillers 30 need not be disposed between the body portion 24A and the turn-up portions 24B.

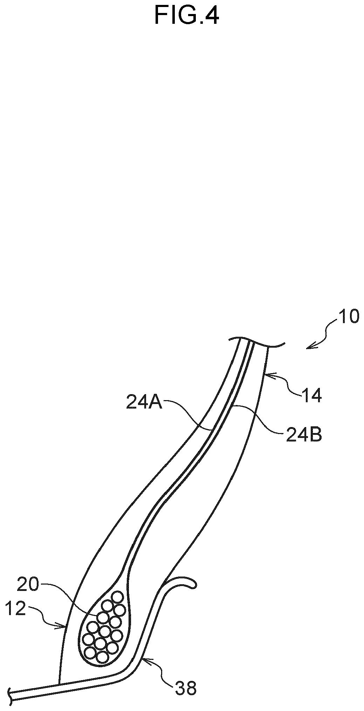

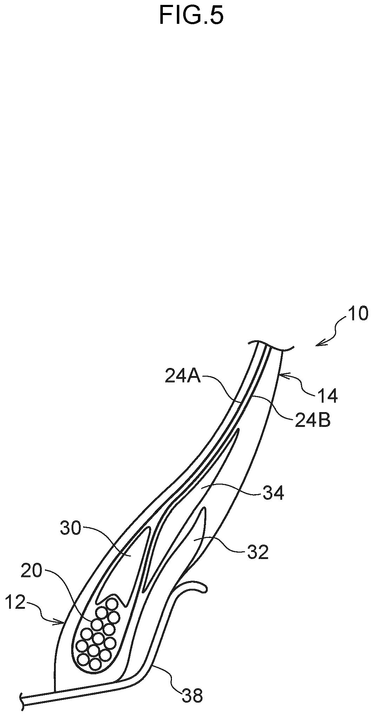

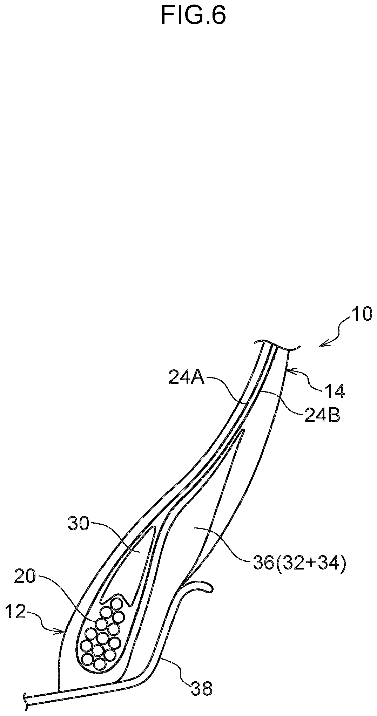

In each of the bead portions 12 of the present embodiment, a rubber chafer 32 is disposed on the tire width direction outer side of the turn-up portion 24B, but the rubber chafer 32 may be disposed as needed; as shown in FIG. 4, the rubber chafer 32 need not be disposed in the bead portion 12. Furthermore, in each of the bead portions 12, as shown in FIG. 5, yet another rubber chafer 34 may be disposed, and as shown in FIG. 6, a large rubber chafer 36 in which the rubber chafer 32 and the rubber chafer 34 are integrated may be disposed.

In the pneumatic tire 10 of the present embodiment, the structure of the bead portions 12, and particularly the structure of the bead cores 20, differs from that of conventional bead portions as described below.

### (Structure of Bead Cores)

As shown in FIG. 2, the bead cores 20 of the present embodiment are formed by winding the metal cords 18, as an example, steel cords. Because the pneumatic tire 10 of the present embodiment is for a passenger car, as the steel cords, for example, cords with a thickness of 0.8 to 1.6 mm are used.

It is preferred that each of the bead cores 20 be configured as follows.
(1) The metal cords 18 are accumulated in plural columns in the width direction orthogonal to the lengthwise direction of the body portion 24A of the carcass ply 24 and in plural rows along the lengthwise direction of the body portion 24A, and the row direction length is greater than the column direction length. In FIG. 2 is shown a bead core 20 where, as an example, the number of rows is six and the number of columns is one to three.

It will be noted that the row direction length of the bead core 20 is a length L of the bead core 20 as measured along a centerline 22CL between the body portion 24A and the turn-up portion 24B of the carcass ply 24. Furthermore, the column direction length of the bead core 20 is the width dimension of the bead core 20 as measured in a direction perpendicular to the centerline 22CL.

(2) The length L of the bead core 20 is set equal to or greater than twice the maximum width dimension 20Wmax of the bead core 20. In other words, the number of rows of the metal cords 18 is set equal to or greater than twice the number of columns of the metal cords 18. It will be noted that the length L of the bead core 20 shown in FIG. 2 is twice the maximum width dimension 20Wmax.

(3) A centroid G of the bead core 20 when seen in a cross section perpendicular to the axis of the bead core 20 (in other words, a cross section along the axis of rotation of the pneumatic tire 10) is positioned on the tire radial direction inner end side of the bead core 20 relative to the lengthwise direction center portion of the bead core 20 (see FIG. 2).

(4) A maximum width portion of the bead core 20 (the site at which it reaches the maximum width dimension 20Wmax) is positioned from the second row of the metal cords 18 on as counted from the metal cord(s) 18 disposed on the tire radial direction inner end of the bead core 20 outward in the tire radial direction.

(5) The maximum width portion of the bead core 20 is positioned from the second row of the metal cords 18 on as counted from the metal cord 18 disposed on the tire radial direction outer end of the bead core 20 inward in the tire radial direction.

(6) In each of the bead cores 20, the metal cords 18 are set in two or more columns from the third row of the metal cords 18 on as counted from the tire radial direction outer end inward in the tire radial direction and excepting the tire radial direction innermost end.

It will be noted that the stiffness of the bead portion 12 in the collapsing direction is largely contributed mainly by the bead core 20 and that the stiffness of the tire side portion 14 in the collapsing direction is largely contributed mainly by the bead filler 30. Furthermore, in cases where the rubber chafer 32, the rubber chafer 34, and the rubber chafer 36 are provided, they secondarily reinforce the stiffness in the collapsing direction. Consequently, the rubber chafer 32, the rubber chafer 34, and the rubber chafer 36 are provided as needed.

Moreover, the bead core 20 and other parts of the pneumatic tire 10 can be configured as follows.

(7) The number of the metal cords 18 arranged at the maximum width portion of the bead core 20 is set to two or more and five or less.

(8) The centroid G of the bead core 20 is disposed on a centerline 20CL of the bead core 20.

(9) The tire radial direction outermost end of the bead core 20 is positioned on the tire radial direction inner side of a radial direction outer end 38P of a rim flange 38A of the mounting rim 38.

(10) The number of the metal cords 18 arranged at the maximum width of the bead core 20 is set to two or three.

(11) A length L30 of the bead filler 30 is set shorter than a length dimension L20 of the bead core 20.

(12) The length L30 of the bead filler 30 to set longer than the length dimension L20 of the bead core 20.

(13) The maximum thickness dimension 30Tmax of the bead filler 30 as measured in a direction orthogonal to the body portion 24A of the carcass 22 is set equal to or less than 1/2 of the maximum width dimension 20Wmax of the bead core 20.

(14) The number of carcass plies is two or more.

(15) The maximum width dimension 20Wmax of the bead core 20 is set greater than a thickness dimension 14G of the tire side portion 14 as measured in a direction perpendicular to the body portion 24A of the carcass 22 at a tire maximum width portion.

(16) The first row on the tire radial direction innermost side of the bead core 20 is formed of one metal cord 18.

(17) The outermost row on the tire radial direction outermost end of the bead core 20 is formed of one metal cord 18.

(18) In each of the bead cores 20, the number of columns of the metal cords 18 gradually decreases heading from the maximum width portion of the bead core 20 inward in the tire radial direction.

(19) In each of the bead cores 20, the number of columns of the metal cords 18 gradually decreases from the maximum width portion of the bead core 20 outward in the tire radial direction.

### (Action and Effects)

The bead core 20 of the pneumatic tire 10 of the present embodiment satisfies all the requirements of (1) to (6), so compared with a conventional pneumatic tire that does not satisfy all the requirements of (1) to (6), the collapsing stiffness of the bead portion 12 can be ensured while achieved a reduction in weight.

By setting, as in (6), the metal cords 18 in two or more columns from the third row on as counted from the tire radial direction outer end inward in the tire radial direction and excepting the tire radial direction innermost end, it becomes possible to realize a reduction in weight while ensuring the stiffness of the bead core 20 in the collapsing direction.

For example, if the metal cords 18 in the third row or the third row and the fourth row as counted from the tire radial direction outer end inward in the tire radial direction were set to one column and the second row as counted from the tire radial direction inner end outward in the tire radial direction were set to one column, the collapsing stiffness of the bead portion 12 would be insufficient. Consequently, in order to ensure the collapsing stiffness of the bead portion 12, the metal cords 18 are set in two or more columns from the third row on as counted from the tire radial direction outer end inward in the tire radial direction and excepting the tire radial direction innermost end.

Furthermore, by setting, as in (7), the number of the metal cords 18 arranged at the maximum width portion of the bead core 20 to two or more and five or less, weight is reduced compared with a case where there are six or more while ensuring the bending stiffness of the bead core 20.

By disposing, as in (8), the centroid G of the bead core 20 on the centerline 20CL of the bead core 20, the body portion 24A and the turn-up portion 24B of the carcass ply 24 disposed on the tire width direction sides of the bead core 20 can be made to bear tension equally.

By positioning, as in (9), the tire radial direction outermost end of the bead core 20 on the tire radial direction inner side of the radial direction outer end 38P of the rim flange 38A of the mounting rim 38, it becomes easier for the part on the tire radial direction outer side of the bead core 20 to deform along the curvature of the rim flange 38A, so that, for example, when a large lateral force acts on the pneumatic tire 10, the load from the pneumatic tire 10 can be dispersed and supported by the wide surface of the rim flange 38A. Furthermore, compared with a case where the tire radial direction outermost end of the bead core 20 is positioned on the tire radial direction outer side of the radial direction outer end 38P of the rim flange 38, the length L of the bead core 20 becomes shorter, resulting in a lighter weight.

By setting, as in (10), the number of the metal cords 18 arranged at the maximum width portion of the bead core 20 to two or three, a good balance can be kept between ensuring the collapsing stiffness of the bead core 20 and reducing weight.

By providing the bead filler 30 between the body portion 24A and the turn-up portion 24B and setting, as in (11), the length L30 of the bead filler 30 shorter than the length dimension L20 of the bead core 20, the stiffness of the tire side portion 14 in the collapsing direction can be lowered while ensuring the stiffness of the bead portion 12 in the collapsing direction obtained by the configuration of the bead core 20. By lowering the stiffness of the tire side portion 14 in the collapsing direction, the stiffness of the bead portion can be ensured and the longitudinal spring constant of the pneumatic tire 10 can be lowered, and it becomes possible to improve vibratility (ride comfort).

By providing the bead filler 30 between the body portion 24A and the turn-up portion 24B and setting, as in (11), the length L30 of the bead filler 30 longer than the length dimension L20 of the bead core 20, the stiffness of the bead portion 12 in the collapsing direction obtained by the configuration of the bead core 20 can be ensured, the stiffness of the tire side portion 14 in the collapsing direction also becomes higher compared with a case where the bead filler 30 is not provided, and it becomes possible to improve the handling and stability of the vehicle.

By setting, as in (13), the maximum thickness dimension 30Tmax of the bead filler 30 as measured in the direction orthogonal to the body portion 24A of the carcass 22 equal to or less than 1/2 of the maximum width dimension 20Wmax of the bead core 20, the volume of the bead filler 30 can be reduced compared with a case where the maximum thickness dimension 30Tmax of the bead filler 30 is not set equal to or less than 1/2 of the maximum width dimension 20Wmax of the bead core 20, and it becomes possible to achieve a reduction in weight while obtaining the effects of the bead filler 30.

It will be noted that it is conceivable for the carcass 22 to be configured by plural carcass plies 24. In a case where the carcass 22 is configured by plural carcass plies 24, it is common for the end portions of the turn-up portions 24B of each of the carcass plies 24 to be disposed staggered in the tire radial direction. When configured in this way, it becomes possible to control the collapsing direction of the tire side portion 14 by changing the number of overlaps of the turn-up portions 24B at each site of the tire side portion 14 in the radial direction.

However, in a case where the carcass 22 is configured by one carcass ply 24 as in the present embodiment, the collapsing direction of the tire side portion 14 becomes unable to be controlled in the way described above.

In the pneumatic tire 10 of the present embodiment, by using one carcass ply 24 it becomes possible to achieve a reduction in weight compared with a case where two or more carcass plies 24 are used, and by combining it with the bead core 20 given the structure of the present embodiment and furthermore with the bead filler 30, it becomes possible to control, even with one carcass ply 24, the stiffness of the tire side portion 14 in the collapsing direction. It will be noted that because a reduction in the weight of the bead core 20 can be achieved, two or more carcass plies 24 may also be used as in (14) as long as they are in a range in which a reduction in weight is achieved.

By setting, as in (15), the maximum width dimension 20Wmax of the bead core 20 greater than the thickness dimension 14G of the tire side portion 14 as measured in the direction perpendicular to the body portion 24A of the carcass 22, the stiffness of the bead core 20 in the collapsing direction can be ensured compared with a case where the maximum width dimension 20Wmax of the bead core 20 is not set greater than the thickness dimension 14G of the tire side portion 14.

In the bead core 20, as in conventionally common bead cores, rows and columns are formed by winding the metal cords 18 outward from the radial direction inner side, and the first one that is wound has terminal ends of the metal cord 18, is isolated compared to the metal cords 18 that are continuous in the circumferential direction of other sites, and has a low capacity to contribute to the bending stiffness of the bead core 20.

By forming, as in (16), the first row on the tire radial direction innermost side of the bead core 20 by winding one metal cord 18 once around, the stiffness of the bead core 20 in the collapsing direction can be effectively displayed in the remaining rows and columns.

By forming, as in (17), the outermost row on the tire radial direction outermost end of the bead core 20 by winding one metal cord 18 once around, the body portion 24A and the turn-up portion 24B of the carcass ply 24 can be smoothly brought closer together outward in the tire radial direction with a minimum step. Because of this, air is less likely to be enclosed between members when manufacturing the "green" tire of the pneumatic tire 10, and it becomes possible to inhibit the occurrence of manufacturing defects.

By gradually decreasing in the bead core 20, as in (18), the number of columns of the metal cords 18 from the maximum width portion of the bead core 20 inward in the tire radial direction, a large step is no longer formed in the outer surface of the bead core 20. Because of this, air is less likely to be enclosed between members (between the bead core 20 and the carcass ply 24, etc.) when manufacturing the "green" tire of the pneumatic tire 10, and it becomes possible to inhibit the occurrence of manufacturing defects.

By gradually decreasing in the bead core 20, as in (19), the number of columns of the metal cords 18 from the maximum width portion of the bead core 20 outward in the tire radial direction, the body portion 24A and the turn-up portion 24B of the carcass ply 24 can be gradually brought closer together outward in the tire radial direction. Because of this, a large step is no longer formed in the outer surface of the bead core 20, air is less likely to be enclosed between members (between the bead core 20 and the carcass ply 24, etc.) when manufacturing the "green" tire of the pneumatic tire 10, and it becomes possible to inhibit the occurrence of manufacturing defects.

### [Other Embodiments]

While an embodiment of the present disclosure has been described above, the present disclosure is not limited to the above embodiment and, in addition to what is described above, can be modified in various ways and implemented in a range that does not depart from the spirit of the present disclosure.

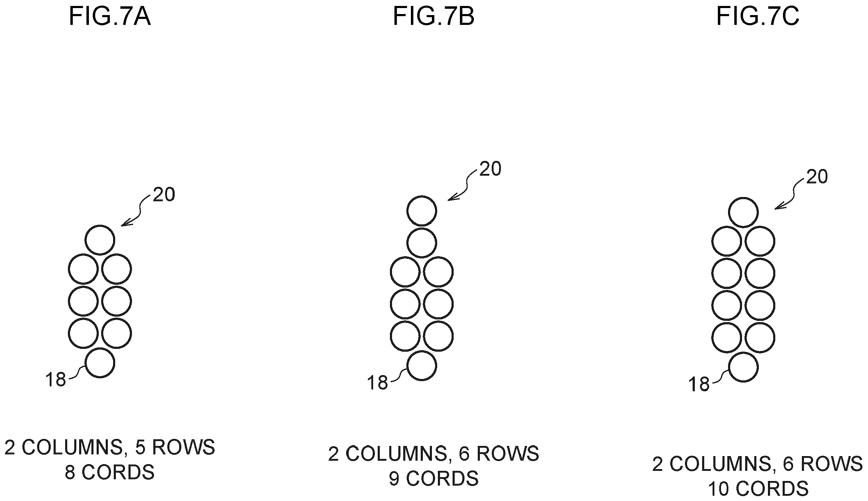

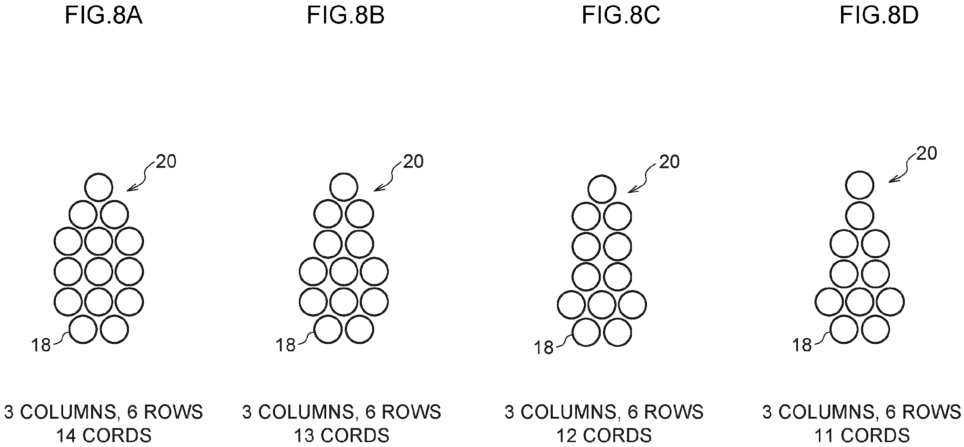

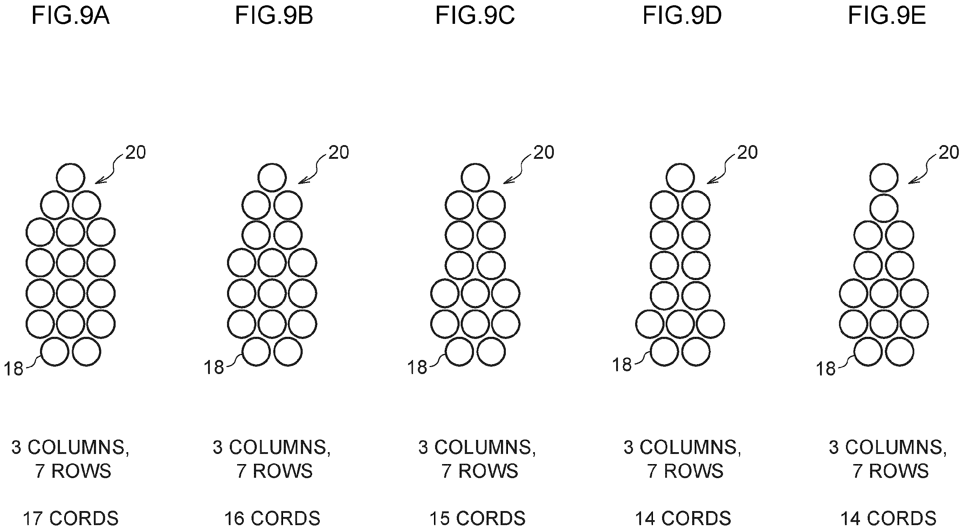

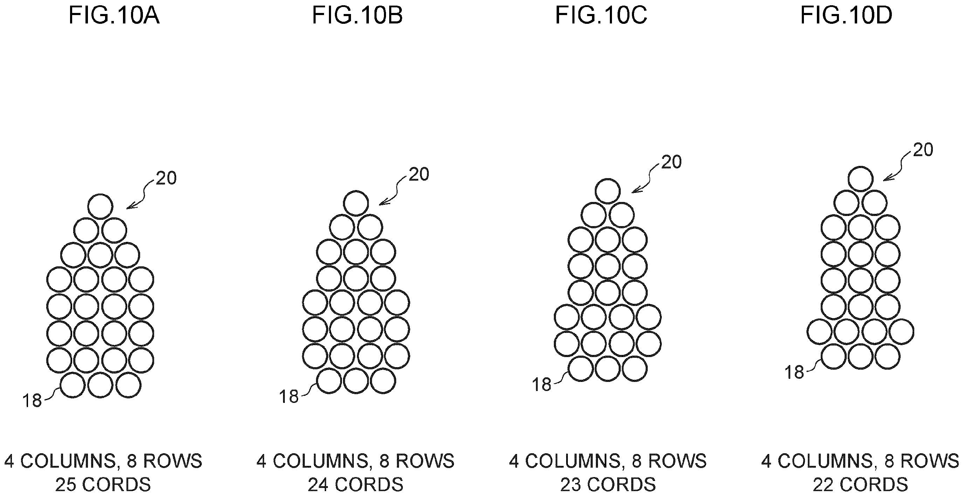

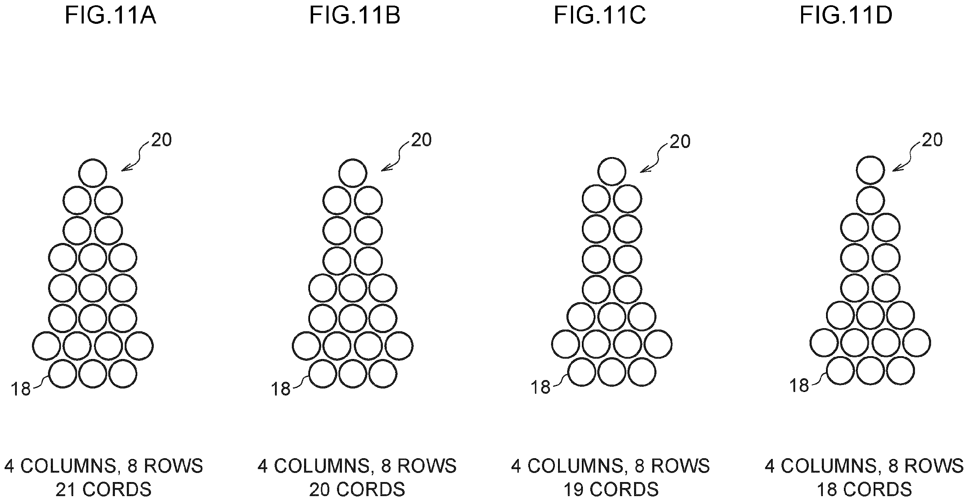

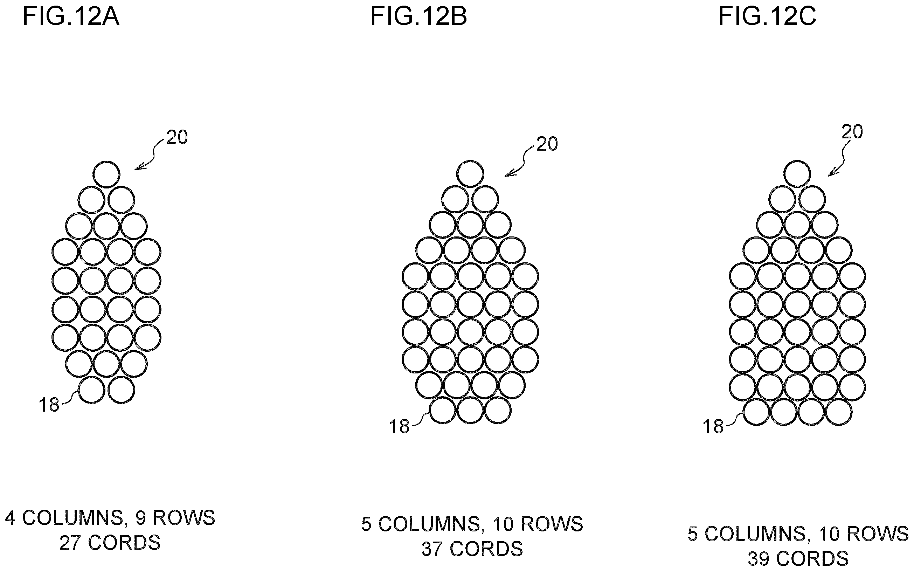

The structure of the bead core 20 shown in FIG. 2 is an example of the present disclosure and, for example, the structures shown in FIG. 7A to FIG. 7C through FIG. 12A to FIG. 12C can be employed as the bead core 20. The structure of the bead core 20 can be changed as appropriate in a range that does not depart from the spirit of the present disclosure in accordance with, for example, the use, type, and required performance of the pneumatic tire 10.

Although the pneumatic tire 10 of the above embodiment was for a passenger car, the present disclosure is not limited to a passenger car and is also applicable to pneumatic tires for vehicles other than passenger cars, such as buses, trucks, kei trucks, and two-wheeled vehicles. Furthermore, the present disclosure is not limited to ordinary pneumatic tires and is also applicable to run-flat tires.

The thickness of the metal cords 18 in the bead core 20 of the above embodiment is a thickness in a case where the pneumatic tire 10 is for a passenger car, and the thickness of the metal cords 18 is changed as appropriate in pneumatic tires for other uses.

The disclosure of Japanese Patent Application No. 2021-023670 filed on February 17, 2021, is incorporated in its entirety herein by reference.

All documents, patent applications, and technical standards mentioned in this specification are incorporated herein by reference to the same extent as if each individual document, patent application, or technical standard were specifically and individually indicated to be incorporated by reference.

## Claims

1. A pneumatic tire comprising:
a pair of bead cores that are embedded in bead portions and are formed by winding metal cords in a tire circumferential direction;
a carcass ply that straddles the pair of bead portions and has a body portion positioned between the bead cores and turn-up portions wound back around the bead cores; and
side rubbers that are disposed on tire width direction outer sides of the carcass ply and form tire side portions, wherein:
in each of the bead cores, the metal cords are accumulated and formed in plural columns in a width direction orthogonal to a centerline between the main body portion and the turn-up portion and in plural rows along the centerline, and a row direction length is greater than a column direction length,
in each of the bead cores, the metal cords are in two or more columns beginning from a third row of the metal cords as counted from a tire radial direction outer end inward in a tire radial direction and excepting a tire radial direction innermost end,
a maximum length dimension of the bead core as measured along the centerline between the body portion and the turn-up portion is equal to or greater than twice a maximum width dimension of the bead core as measured in a direction perpendicular to a lengthwise direction of the bead core,
a centroid of the bead core when seen in a cross section perpendicular to an axis of the bead core is positioned on a tire radial direction inner end side of the bead core relative to a lengthwise direction center portion of the bead core,
a maximum width portion of the bead core is positioned beginning from a second row of the metal cords as counted from the tire radial direction inner end of the bead core outward in the tire radial direction, and
the maximum width portion of the bead core is positioned beginning from the second row of the metal cords as counted from the tire radial direction outer end of the bead core inward in the tire radial direction.

2. The pneumatic tire of claim 1, wherein a number of the metal cords arranged at the maximum width portion of the bead core is set to two or more and five or less.

3. The pneumatic tire of claim 1 or claim 2, wherein the centroid of the bead core is positioned on a width direction centerline of the bead core.

4. The pneumatic tire of any one of claim 1 to claim 3, wherein a tire radial direction outermost end of the bead core is positioned on a tire radial direction inner side of a radial direction outer end of a rim flange of a mounting rim.
